# EUROPÄISCHE PATENTANMELDUNG

(11) **EP 3 958 527 A1**
(43) Veröffentlichungstag der Anmeldung: **23.02.2022**
(21) Anmeldenummer: 20191531.1
(22) Anmeldetag: 18.08.2020
(51) Int. Cl.: H04L 29/06, H04W 12/084, H04L 29/08

(54) **AUTHENTISIERUNG EINES KOMMUNIKATIONSPARTNERS AN EINEM GERÄT**

(71) Anmelder: Siemens Aktiengesellschaft, 80333 München (DE)
(72) Erfinder: Falk, Rainer, 85586 Poing (DE); Fries, Steffen, 85598 Baldham (DE)

(57) **Zusammenfassung**

Verfahren zur Authentisierung eines Kommunikationspartners (ST) an einem Gerät, bei dem neben einer physikalischen Geräterealisierung (FD1) mindestens eine dem Gerät zugeordnete virtuelle Geräterealisierung (TD-FD1) vorliegt, mit den Schritten:
- Empfangen (S1) einer Zugriffsberechtigung eines Kommunikationspartners (ST) in einer ersten dieser beiden Geräterealisierungen,
- Überprüfen (S2) der Zugriffsberechtigung durch die erste Geräterealisierung, und
- falls die Zugriffsberechtigung als zulässig erachtet wird, Bereitstellen (S3) eines Berechtigungsnachweises (AC) von der ersten Geräterealisierung an den Kommunikationspartner (ST), und
- Erlauben (S4) eines Zugriffs auf die zweite Geräterealisierung dieser beiden Geräterealisierungen durch den Kommunikationspartner (ST) mittels des Berechtigungsnachweises (AC).

## Beschreibung

Die Erfindung betrifft ein Verfahren zur Authentisierung eines Kommunikationspartners an einem Gerät, bei dem neben einer physikalischen Geräterealisierung mindestens eine dem Gerät zugeordnete virtuelle Geräterealisierung vorliegt.

Der Zugriff auf ein Gerät, wie beispielsweise ein Feldgerät, ein Steuergerät, ein Internet der Dinge (IoT)-Gerät und dergleichen, über eine Netzwerkverbindung muss authentisiert werden, um einen Zugriff durch Unberechtigte zu verhindern. Im industriellen Umfeld kann ein Zugriff nicht nur durch andere Geräte eines Automatisierungssystems erfolgen, sondern beispielsweise durch einen Servicetechniker, der über eine lokale, netzwerkbasierte Service-Schnittstelle oder aber über einen Fernwartungszugang auf das Gerät zugreift.

Im industriellen Umfeld spielt zunehmend das Konzept des digitalen Zwillings, auch als Digital Twin oder Verwaltungsschale bzw. Administration Shell bezeichnet, eine wesentliche Rolle. Dabei wird durch den digitalen Zwilling eine virtuelle Repräsentation eines realen Objektes realisiert.

Das Einrichten und die Verwaltung von Zugriffsberechtigungen für einen Servicetechniker oder einen anderen Kommunikationspartner sowie das Einrichten und Verwalten korrespondierender Überprüfungsdaten ist aufwendig. So müssen beispielsweise Passwortinformationen, öffentliche Schlüsselzertifikate oder auch Berechtigungsinformationen in einer Nutzerdatenbank eingerichtet und verwaltet werden. In industriellen Umgebungen sind zudem Kommunikationsnetze häufig von externen Kommunikationsnetzen isoliert, sodass ein zentraler Sicherheitsdienst, wie beispielsweise ein Verzeichnisdienst oder Authentisierungsserver, nicht nutzbar ist.

Des Weiteren haben solche Geräte häufig eine geringe Rechenleistung oder werden über Batterie mit Strom versorgt, sodass dort aufwendige Abfragen oder Operationen vermieden werden sollten.

Es ist somit die Aufgabe der vorliegenden Erfindung, die Zugangsauthentisierung zu solchen Geräten möglichst energie- und kapazitätsschonend zu gestalten und dennoch einen ausreichenden Schutz und flexible Zugriffsmöglichkeiten zu gewährleisten.

Die Aufgabe wird durch die in den unabhängigen Ansprüchen beschriebenen Maßnahmen gelöst. In den Unteransprüchen sind vorteilhafte Weiterbildungen der Erfindung dargestellt.

Gemäß einem ersten Aspekt betrifft die Erfindung ein Verfahren zur Authentisierung eines Kommunikationspartners an einem Gerät, bei dem neben einer physikalischen Geräterealisierung mindestens eine dem Gerät zugeordnete virtuelle Geräterealisierung vorliegt, mit den Schritten:
- Empfangen einer Zugriffsberechtigung eines Kommunikationspartners in einer ersten dieser beiden Geräterealisierungen,
- Überprüfen der Zugriffsberechtigung durch die erste Geräterealisierung, und
- falls die Zugriffsberechtigung als zulässig erachtet wird, Bereitstellen eines Berechtigungsnachweises von der ersten Geräterealisierung an den Kommunikationspartner, und
- Erlauben eines Zugriffs auf die zweite Geräterealisierung dieser beiden Geräterealisierungen durch den Kommunikationspartner mittels des Berechtigungsausweises.

Dies ermöglicht einen vereinfachten Zugang des Kommunikationspartners auf die zweite Geräterealisierung. Empfängt die zweite Geräterealisierung den Berechtigungsnachweis vom Kommunikationspartner, so erlaubt die zweite Geräterealisierung den Zugriff ohne weitere Überprüfungen oder mit reduziertem Überprüfungsumfang. Dadurch können Aufgaben beispielsweise zur Prüfung von Parametern zwischen den beiden Geräterealisierungen aufgeteilt und somit jede einzelne Geräterealisierung entlastet werden. Es ist somit nicht erforderlich, dass alle zu prüfenden Parameter bzw. Informationen dazu auf beiden Geräterealisierungen verfügbar sind und verwaltet werden. Dabei kann der Kommunikationspartner entweder eine Zugriffsberechtigung an die physikalische Geräterealisierung oder an die virtuelle Geräterealisierung übermitteln. Wird die Zugriffsberechtigung von der physikalischen Geräterealisierung empfangen, so ist diese die erste Geräterealisierung und entsprechend die virtuelle Geräterealisierung die zweite Geräterealisierung. Umgekehrt wird die Zugriffsberechtigung vom Kommunikationspartner an die virtuelle Geräterealisierung gesendet und dort empfangen, ist diese die erste Geräterealisierung. Die virtuelle Geräterealisierung stellt nach erfolgreicher Prüfung einen Berechtigungsnachweis dem Kommunikationspartner bereit, der einen Zugriff auf die physikalische Geräterealisierung, die dann die zweite Geräterealisierung darstellt, erlaubt. Eine Zugriffsberechtigung ist beispielsweise ein Passwort, ein Zugriffscode, ein Zugriffstoken, eine biometrische Authentisierungsinformation oder auch eine kryptografische Authentisierungsinformation unter Nutzung eines geheimen/öffentlichen kryptografischen Schlüssels bzw. eines digitalen Zertifikates, in dem der öffentliche Schlüssel enthalten ist.

In einer vorteilhaften Ausführungsform ist der Berechtigungsnachweis ein Zugangsberechtigungsnachweis für eine Zugangsauthentisierung des Kommunikationspartners bei der zweiten Geräterealisierung ist und/oder ein Zugriffsberechtigungsnachweis für dem Kommunikationspartner gewährte Zugriffsrechte auf die zweite Geräterealisierung ist.

Somit kann sich der Kommunikationspartner durch den erhaltenen Berechtigungsnachweis bei der zweiten Geräterealisierung authentisieren und/oder dort auch Zugriffsberechtigungen beispielsweise entsprechend unterschiedlichen Sicherheitsstufen Zugriffsrechte geprüft und gewährt werden.

In einer vorteilhaften Ausführungsform ist die Gültigkeit des Berechtigungsnachweises zeitlich begrenzt.

Dadurch kann eine missbräuchliche Nutzung des Berechtigungsnachweises verringert werden. Die zeitliche Begrenzung kann beispielsweise eine beschränkte Gültigkeitsdauer oder auch ein vorgegebener Zeitraum sein, innerhalb dem der Berechtigungsnachweis gültig ist. Dadurch wird begrenzt, wann eine Zugangsauthentisierung zur zweiten Geräterealisierung durchgeführt werden darf. Nach der vorgegebenen Gültigkeitsdauer wird kein weiterer Zugriff des Kommunikationspartners auf die zweite Geräterealisierung erlaubt. Andererseits kann durch die zeitlich begrenzte Gültigkeit der Berechtigungsrealisierung begrenzt werden, wie lange die aufgebaute Verbindung maximal bestehen bleiben darf.

In einer vorteilhaften Ausführungsform ist die Anzahl der Zugriffe auf die zweite Geräterealisierung mittels des Berechtigungsnachweises begrenzt.

Beispielsweise kann der Berechtigungsnachweis nur einmalig nutzbar sein, beispielsweise für nur einen einmaligen Aufbau der Verbindung zur zweiten Geräterealisierung nutzbar sein. Dies erlaubt eine flexible Begrenzung der Nutzung des Berechtigungsnachweises für die zweite Geräterealisierung und schützt damit vor einer ungewünschten unbegrenzten Nutzung des Berechtigungsnachweises der zweiten Geräterealisierung. Dazu kann die zweite Geräterealisierung einen benutzten Berechtigungsnachweis in eine Liste benutzter Berechtigungsnachweise eintragen. Dadurch kann eine erneute Benutzung eines bereits verwendeten Berechtigungsnachweises erkannt werden und dieser abgewiesen werden.

In einer vorteilhaften Ausführungsform wird der Berechtigungsnachweis widerrufen oder nicht erneuert, wenn die Verbindung zwischen der ersten Geräterealisierung und dem Kommunikationspartner beendet wird.

Dies erlaubt eine Kopplung der Verbindung des Kommunikationspartners zu den beiden Geräterealisierungen. Der Zugriff auf die zweite Geräterealisierung ist damit nur solange möglich, wie auch der Zugriff auf die erste Geräterealisierung besteht.

In einer vorteilhaften Ausführungsform ist der Berechtigungsnachweis ein digitales Zertifikat oder ein kryptografischer Schlüssel oder ein Zugangstoken.

Das digitale Zertifikat kann beispielsweise ein Zertifikat mit einem öffentlichen Schlüssel entsprechend einem öffentlichen Schlüsselinfrastrukturverfahren oder ein Attributzertifikat sein. Ein solches Zertifikat ist beispielsweise entsprechend dem X.509 Standard strukturiert und enthält den öffentlichen Schlüssel eines asymmetrischen kryptografischen Verfahrens. Der Berechtigungsnachweis kann ein kryptografischer Schlüssel, insbesondere ein Schlüssel eines symmetrischen kryptografischen Verfahrens sein. Ist der Berechtigungsnachweis ein Zugangstoken, beispielsweise ein Token entsprechend einem OAuth (Open Authorization) oder einem JSON (JavaScript Objekt Notation) Web oder einem SAML (Security Assertion Markup Language) Standard, so kann damit Information zur Autorisierung eines Zugriffs, beispielsweise auf geschützte Ressourcen und hier insbesondere auf Ressourcen in der zweiten Geräterealisierung bereitgestellt werden. Durch die Verwendung dieser bekannten Datenstrukturen sind nur geringe Änderungsaufwände zur Integration dieser bekannten Strukturen notwendig.

In einer vorteilhaften Ausführungsform umfasst der Berechtigungsnachweis mindestens eine der folgenden Informationen: eine Kennung des Zertifikats des Kommunikationspartners, Autorisierungsinformation des Kommunikationspartners, eine Zeiteinschränkung und/oder geografische Einschränkung für den Zugang des Kommunikationspartners, eine Einschränkung der nutzbaren Kommunikationsmedien, eine Einschränkung der nutzbaren Kommunikationsprotokolle, eine Information zum Sicherheitszustand des Kommunikationspartners, ein Identitätsprüfwert des Berechtigungsnachweises.

Die Information zum Sicherheitszustand des Kommunikationspartners kann anzeigen, ob dessen Konfiguration und/oder dessen Firmware-/Softwarestand zulässig ist. Dadurch kann verhindert werden, dass ein manipuliertes Gerät für den Zugriff verwendet werden kann.
Somit kann durch den Berechtigungsnachweis eine Vielzahl weiterer Informationen von der ersten Geräterealisierung an die zweite Geräterealisierung übermittelt werden und dadurch in der ersten Geräterealisierung gesammelte Informationen und Überprüfungsergebnisse der zweiten Geräterealisierung mitgeteilt werden. Eine Kommunikation zwischen der ersten und der zweiten Geräterealisierung ist darüber hinaus möglich und insbesondere zur Übermittlung von Informationen bezüglich der stattgefundenen Authentifizierung sinnvoll.

In einer vorteilhaften Ausführungsform wird der Berechtigungsnachweis bei einem Aufbau einer sicheren Kommunikationsverbindung von der ersten Geräterealisierung an den Kommunikationspartner und/oder vom Kommunikationspartner an die zweite Geräterealisierung übermittelt.

Beispielsweise kann der Berechtigungsnachweis beim Aufbau einer Kommunikationsverbindung gemäß dem Transportschicht-Sicherheitsprotokoll TLS von der ersten Geräterealisierung innerhalb eines TLS Handshakes an den Kommunikationspartner übermittelt werden. Damit steht der Berechtigungsnachweis zu einem frühen Zeitpunkt dem Kommunikationspartner bereit und es können bereits zu diesem Zeitpunkt Zugriffsberechtigungen und dergleichen berücksichtigt werden.

In einer vorteilhaften Ausführungsform wird der Berechtigungsnachweis über eine authentisierte, bestehende Kommunikationsverbindung von der ersten Geräterealisierung an den Kommunikationspartner und/oder vom Kommunikationspartner an die zweite Geräterealisierung übermittelt.

Dies kann beispielsweise im Kopfteil einer Verbindung entsprechend dem Hypertext Transfer Protokoll http-Verbindung übermittelt werden. Dabei ist jede Kombination der Art des Transports des Berechtigungsnachweis, also beim Verbindungsaufbau oder auf authentisierter, bestehender Kommunikationsverbindung, für die beiden Kommunikationsverbindungen, also einerseits für eine erste Kommunikationsverbindung zwischen der ersten Geräterealisierung und dem Kommunikationspartner und für eine zweite Kommunikationsverbindung zwischen dem Kommunikationspartner und der zweiten Geräterealisierung möglich. Beispielsweise kann der Berechtigungsnachweis von der ersten Geräterealisierung zum Kommunikationspartner beim Aufbau einer sicheren Kommunikationsverbindung übermittelt werden, wohingegen zwischen dem Kommunikationspartner und der zweiten Geräterealisierung der Berechtigungsnachweis über eine authentisierte, bestehende Kommunikationsverbindung übermittelt wird.

In einer vorteilhaften Ausführungsform wird zusätzlich eine Adressinformation der zweiten Geräterealisierung von der ersten Geräterealisierung an den Kommunikationspartner bereitgestellt.

Dies erleichtert es dem Kommunikationspartner die zweite Geräterealisierung korrekt zu adressieren.

In einer vorteilhaften Ausführungsform wird beim Überprüfen der Zugangsberechtigung durch die erste Geräterealisierung die Integrität und/oder eine Zulässigkeit der aktuellen Konfiguration des Kommunikationspartners überprüft.

Dabei kann beispielsweise überprüft werden, ob die auf dem Kommunikationspartner installierte Firmware/Software gültig und freigegeben ist, ob ein sogenannter Patch Level, also der Aktualisierungstand der Firm- bzw. Software, auf dem aktuellen Stand ist. Des Weiteren kann überprüft werden, ob ein Virusscanner aktiv ist und/oder aktuelle Virusmuster vorliegen. Allgemein wird dies auch als ein "Null-Vertrauens-Zugang" oder auch "Zero Trust Access" bezeichnet. Da diese Überprüfungen häufig aufwendig sind, ist es vorteilhaft, wenn diese Überprüfungen der Integrität des Kommunikationspartners von der ersten Geräterealisierung beim Verbindungsaufbau zum Kommunikationspartner durchgeführt werden. Der von der ersten Geräterealisierung ausgestellte Berechtigungsnachweis kann dann gegenüber der zweiten Geräterealisierung bestätigen, dass die Integrität des Kommunikationspartners bereits erfolgreich überprüft wurde. Die erste Geräterealisierung kann die ermittelte und überprüfte Konfiguration des Kommunikationspartners kryptografisch geschützt codieren, sodass die zweite Geräterealisierung diese Information inhaltlich prüfen kann, aber nicht nochmals selbst erfassen und bewerten muss.

In einer vorteilhaften Ausführungsform übermittelt die erste Geräterealisierung eine Information zur Konfiguration des Gerätes an den Kommunikationspartner.

Dies ermöglicht einen geringeren Überprüfungsaufwand für den Kommunikationspartner. Wenn der Kommunikationspartner diese Information zur Konfiguration des ersten Gerätes über die erste Geräterealisierung überprüft und als zulässig eingestuft hat, verwendet er den bereitgestellten Berechtigungsnachweis für den Zugriff auf die zweite Gerätrealisierung ohne eine erneute Überprüfung der Information zur Gerätekonfiguration vorzunehmen. Da es sich bei einem physikalischen Gerät und dessen digitalen Zwilling um zwei übereinstimmend konfigurierte Geräterealisierungen handelt, kann somit eine erneute Überprüfung vermieden werden.

Ein zweiter Aspekt der Erfindung betrifft ein Gerät umfassend eine physikalische Geräterealisierung und eine zugeordnete virtuelle Geräterealisierung, die derart ausgebildet sind,
- eine Zugriffsberechtigung eines Kommunikationspartners in einer ersten dieser beiden Geräterealisierungen zu empfangen,
- die Zugriffsberechtigung durch die erste Geräterealisierung zu überprüfen und
- falls die Zugriffsberechtigung als zulässig erachtet wird, einen Berechtigungsnachweis von der ersten Gerätrealisierung an den Kommunikationspartner bereitzustellen und
- einen Zugriff auf die zweite Geräterealisierung dieser beiden Geräterealisierungen durch den Kommunikationspartner mittels des Berechtigungsnachweises zu erlauben.

Ein solches Gerät, das sowohl eine physikalische Geräterealisierung als auch eine virtuelle Geräterealisierung, beispielsweise einen digitalen Zwilling aufweist, können komplexe Prüfungen, die insbesondere im Rahmen einer Null-Vertrauens-Authentisierung erfolgen, nicht vom realen Gerät, das heißt der physikalischen Geräterealisierung durchgeführt werden, sondern auf dessen digitalen Zwilling, also die virtuelle Geräterealisierung verlagert werden. Die physikalische Geräterealisierung eines Geräts kann beispielsweise ein Altgerät sein, dem nun ein digitaler Zwilling zugeordnet ist. Über den digitalen Zwilling kann flexibel konfiguriert und aktualisiert werden, welche Information für einen Null-Vertrauens-Zugang benötigt wird und wie diese zu übermitteln ist.

In einer vorteilhaften Ausführungsform ist die virtuelle Geräterealisierung als ein OPC UA-Server gemäß einem Open Plattform Communication Unified Architecture Standard ausgebildet.

Ist der OPC-UA-Server beispielsweise als integrierte virtuelle Geräterealisierung auf der physikalischen Geräterealisierung implementiert, so ist es möglich, dass das Gerät bei einem Zugriff auf das Gerät, beispielsweise bei einer Steuerdatenkommunikation oder einem Zugriff auf einen integrierten Geräte-Web-Server, einen Berechtigungsnachweis für den Zugriff auf eine geräteinterne virtuelle Geräterealisierung bereitzustellt. Speziell kann bei einem Aufbau einer sicheren Kommunikationsverbindung ein temporärer Zugang auf den OPC UA-Server der physikalischen Geräterealisierung eingerichtet werden und ein Berechtigungsnachweis an den Kommunikationspartner übermittelt werden. Damit kann der Kommunikationspartner auf den OPC UA-Server als virtuelle Geräterealisierung auf der physikalischen Geräterealisierung zugreifen.

In einer vorteilhaften Ausführungsform ist die virtuelle Geräterealisierung auf einem zentralen Server, einem Randserver oder auf der physikalischen Geräterealisierung des Gerätes ausgebildet.

Ein zentraler Server oder auch ein am Rand eines Automatisierungsnetzes positionierter Randserver stellt eine im Vergleich zum Gerät selbst größere Rechenleistung bereit und umfasst häufig weitere Datenbanken wie beispielsweise eine Konfigurations- oder Inbetriebnahme-Datenbank, über die mit geringer Übertragungsbandbreite schnell auf eine große Anzahl von Daten zum Gerät sowie zum Kommunikationspartner zugegriffen werden können und somit ein sehr effizientes Überprüfen des Kommunikationspartners als auch der Zugriffsberechtigungen zum Gerät abgefragt werden können.

Ein dritter Aspekt der Erfindung betrifft ein Computerprogrammprodukt, umfassend ein nicht flüchtiges computerlesbares Medium, das direkt in einen Speicher eines digitalen Computers ladbar ist, umfassend Programmcodeteile, die dazu geeignet sind, die Schritte des Verfahrens durchzuführen.

Sofern es in der nachfolgenden Beschreibung nicht anders angegeben ist, beziehen sich die Begriffe "empfangen", "überprüfen", "bereitstellen", "erlauben" und dergleichen, vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliege können, beispielsweise als elektrische Impulse. Das Gerät und darin insbesondere die physikalische als auch die virtuelle Geräterealisierung kann einen oder mehrere Prozessoren umfassen. Unter einem Prozessor kann im Zusammenhang mit der Erfindung beispielsweise ein Hauptprozessor, ein Mikroprozessor oder ein Mikrocontroller verstanden werden. Es kann sich beispielsweise auch um einen virtuellen Prozessor oder um eine Soft-CPU handeln.

Ein Computerprogrammprodukt, wie z. B. ein Computerprogrammmittel, kann beispielsweise als Speichermedium, wie z. B. Speicherkarte, USB-Stick, CD-ROM, DVD oder auch in Form einer herunterladbaren Datei von einem Server in einem Netzwerk bereitgestellt oder geliefert werden. Dies kann z. B. in einem drahtlosen Kommunikationsnetzwerk durch die Übertragung einer entsprechenden Datei auf das Computerprogrammprodukt oder dem Computerprogrammmittel erfolgen.

Ausführungsbeispiele des erfindungsgemäßen Verfahrens und des erfindungsgemäßen Geräts sind in den Zeichnungen beispielhaft dargestellt und werden anhand der nachfolgenden Beschreibung näher erläutert. Es zeigen:
- Fig. 1: ein Ausführungsbeispiel eines erfindungsgemäßen Geräts eingebunden in ein Anlagennetzwerk in schematischer Darstellung;
- Fig. 2: ein erstes Ausführungsbeispiel des erfindungsgemäßen Verfahrens in Form eines Nachrichtenablaufdiagramms; und
- Fig. 3: ein zweites Ausführungsbeispiel des erfindungsgemäßen Verfahrens, bei dem zwei Geräte mit jeweils einer physikalischen und einer virtuellen Geräterealisierung eine Authentisierung durchführen in Form eines Nachrichtenablaufdiagramms.

Einander entsprechende Teile sind in allen Figuren mit den gleichen Bezugszeichen versehen.

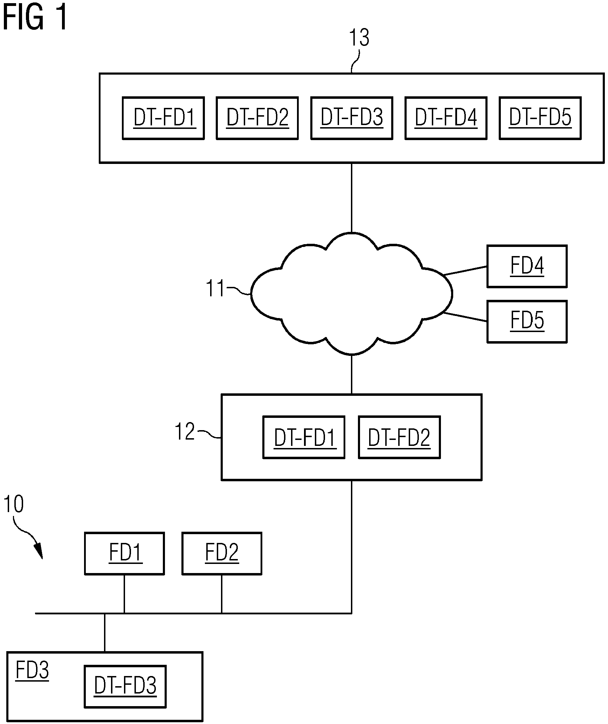

Figur 1 zeigt ein Kommunikationsnetzwerk mit mehreren Geräten. Die Geräte sind beispielsweises Feldgeräte, die mit einem Kommunikationsnetz einer Industrieanlage verbunden sind. Jedes Gerät umfasst eine physikalische Geräterealisierung FD1, FD2, FD3, FD4, FD5 und mindestens eine zugeordnete virtuelle Geräterealisierung DT-FD1, DT-FD2, DT-FD3, DT-FD4, DT-FD5. Die physikalischen Geräterealisierungen FD1, FD2, FD3 sind mit einem Teilnetzwerk 10, beispielsweise einem Automatisierungsnetzwerk, verbunden. Das Teilnetzwerk 10 ist über einen Randserver 12 mit dem offenen Netzwerk 11 verbunden. Der Randserver 12 stellt Übergangsfunktionen für die Zusammenarbeit mit Komponenten des Anlagennetzwerks, die außerhalb des Teilnetzes 10 angeordnet sind, bereit. Die physikalischen Geräterealisierungen FD4, FD5 sind direkt mit dem offenen Netzwerk 11, beispielsweise einem Büronetz oder dem öffentlichen Internet, verbunden. Über das offene Netzwerk 11 ist ein zentraler Server, beispielsweise ein Cloud-Server, der Rechenleistung und Speicherkapazität zentral für das Anlagennetzwerk zur Verfügung stellt, angebunden.

Den physikalischen Geräterealisierungen FD1, FD2 sind jeweils zwei virtuelle Geräterealsierungen DT-FD1, DT-FD2 zugeordnet. Jeweils eine virtuelle Geräterealisierung DT-FD1, DT-FD2 ist im Randserver 12 und dem Cloud-Server 13 angeordnet. Eine virtuelle Geräterealisierung DT-FD3 zur physikalischen Geräterealisierung FD3 ist innerhalb der physikalischen Geräterealisierung FD3 und zusätzlich im zentralen Server 13 angeordnet. Die der physikalischen Geräterealisierung FD4 und FD5 zugeordneten virtuellen Geräterealisierungen DT-FD4 und DT-FD5 sind ausschließlich im zentralen Server 13 angeordnet. Eine virtuelle Geräterealisierung wird häufig auch als digitaler Zwilling bezeichnet und kann beispielsweise als Applikation ausgebildet sein. Die virtuelle Geräterealisierung kann insbesondere auch als ein OPC UA-Server ausgebildet sein.

Informationen über die physikalische Geräterealisierung können über einen Zugriff auf den OPC UA-Server abgefragt werden. Der OPC UA-Server kann außerhalb der physikalischen Geräterealisierung, beispielsweise im Randserver 12 oder im zentralen Server 14 ausgebildet sein. Der OPC UA-Server einer virtuellen Geräterealisierung kann aber auch in Form eines OPC UA-Anwendungsdienstes auf dem Gerät selbst implementiert sein, wie beispielsweise für die physikalische und virtuelle Geräterealisierung FD3, DT-FD3. In diesem Fall kann die physikalische Geräterealisierung FD3 selbst einem Kommunikationspartner einen Berechtigungsnachweis für den Zugriff auf den in die physikalische Geräterealisierung integrierten OPC UA-Server bereitstellen. Wenn der Kommunikationspartner auf eine erste der beiden Geräterealisierungen, beispielsweise die physikalische Geräterealisierung FD3 zugreifen kann, erhält er automatisch auch Zugriff auf die zweite Geräterealisierung, hier die virtuelle Geräterealisierung DT-FD3, in diesem Fall den OPC UA-Server des Gerätes. Dies ist insbesondere sinnvoll, wenn mehrere Instanzen von Diensten getrennt auf der physikalischen Geräterealisierung FD3 ablaufen. Insbesondere kann der Kommunikationspartner auf einen Webserver der physikalischen Geräterealisierung zugreifen, beispielsweise über eine authentisierte HTTPS-Kommunikationsverbindung.

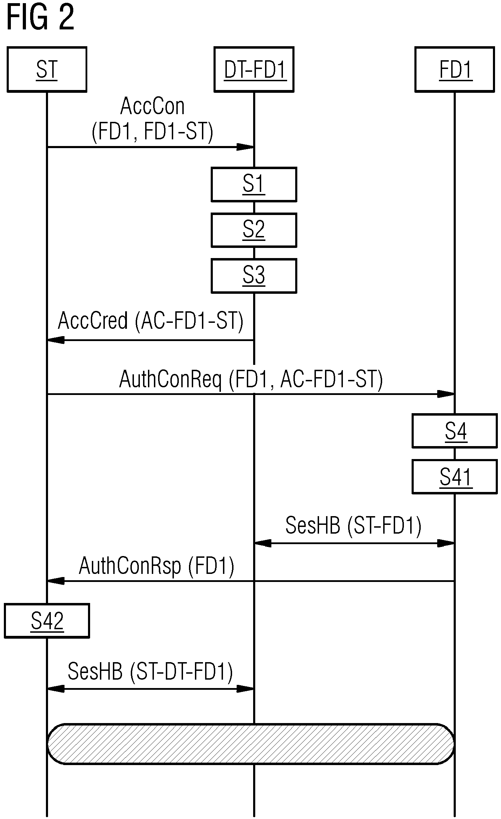

Figur 2 zeigt nun ein konkretes Ausführungsbeispiel, in dem sich ein Kommunikationspartner ST, beispielsweise ein Servicetechniker, mit der virtuellen Gerätrealisierung DT-FD1 eines Gerätes verbindet und einen Berechtigungsnachweis abfragt. Das Gerät ist in Figur 2 zum einen mit der virtuellen Geräterealisierung DT-FD1 und seiner physikalischen Geräterealisierung FD1 dargestellt.

Als erstes authentisiert sich der Kommunikationspartner ST bei einer ersten der beiden Geräterealisierungen, hier der virtuellen Geräterealisierung DT-FD1. Die virtuelle Geräterealisierung DT-FD1 empfängt dabei in einem ersten Verfahrensschritt S1 eine Zugriffsberechtigung des Kommunikationspartners ST. Die erste Geräterealisierung, überprüft nun die Zugriffsberechtigung, siehe Verfahrensschritt S2 und stellt im Verfahrensschritt S3 einen Berechtigungsnachweis AC, in Figur 2 als AC-FD1-ST bezeichnet für den Berechtigungsnachweis für den Zugriff auf die physikalische Geräterealisierung FD1 durch den Kommunikationspartner ST, an dem Kommunikationspartner ST bereit. Der Berechtigungsnachweis AC wird hier beispielsweise durch eine Bestätigungsnachricht ACC-Cred von der virtuellen Geräterealisierung DT-FD1 an den Kommunikationspartner ST übermittelt.

Anschließend sendet der Kommunikationspartner ST eine Authentisierungsanfrage AuthConReq, die den Berechtigungsnachweis AC enthält, an die zweite Geräterealisierung, hier die physikalische Geräterealisierung FD1. Der Berechtigungsnachweis AC wird in der zweiten Geräterealisierung überprüft und anschießend dem Kommunikationspartner ST ein Zugriff auf die zweite Geräterealisierung FD1 gewährt. Dies wird mit einer Bestätigungsnachricht AuthConRsp von der zweiten Geräterealisierung an den Kommunikationspartner ST bestätigt. Der Berechtigungsnachweis AC kann wie im dargestellten Beispiel ein Zugangsberechtigungsnachweis für eine Zugangsauthentisierung des Kommunikationspartners ST bei der zweiten Geräterealisierung sein. Der Berechtigungsnachweis AC kann aber auch als ein Zugriffsberechtigungsnachweis für gewährte Zugriffsrechte des Kommunikationspartners auf die zweite Geräterealisierung sein. Somit hat der Kommunikationspartner ST, der auf die erste Geräterealisierung Zugriff hat, auch Zugriff auf die zweite Geräterealisierung.

Es ist nicht erforderlich, dass die Informationen zur Zugangsauthentifizierung und Informationen zur Zugriffsberechtigung auf beiden Geräterealisierungen verwaltet werden. Somit wird Administrationsaufwand reduziert und es werden grundsätzlich inkonsistente Zugangsdatenkonfigurationen zwischen den beiden Geräterealisierungen vermieden. Insbesondere ermöglicht dies auch, dass eine physikalische Geräterealisierung FD1 sowohl die Zugriffsberechtigung des Kommunikationspartners ST direkt erhält und prüft als auch zusätzlich den Berechtigungsnachweis AC zur Freigabe des Zugriffs von der zugeordneten virtuellen Geräterealisierung DT-FD1 erhält. Weiterhin ist es möglich, Logging-Nachrichten sowohl von der physikalischen FD1 als auch von der virtuellen Geräterealisierung DT-FD1 zu kritischen Aktionen zu erhalten, die beispielsweise bei einer Auditierung benötigt werden.

Die Gültigkeit des ausgestellten Berechtigungsnachweises AC kann zeitlich begrenzt sein. Diese Benutzungsbeschränkung kann innerhalb des Berechtigungsnachweises AC aber auch außerhalb des Berechtigungsnachweises AC übermittelt werden. Der Berechtigungsnachweis kann dazu beispielsweise einen Zeitstempel enthalten. Dabei kann die Gültigkeitsdauer einen Zeitraum angeben, in dem eine Zugangsauthentisierung oder Zugriffsanfrage zur zweiten Geräterealisierung zulässig ist oder wie lange die aufgebaute Kommunikationsverbindung maximal bestehen bleiben darf. Auch ist es möglich, dass die Anzahl der Zugriffe auf die zweite Geräterealisierung durch den Berechtigungsnachweis AC begrenzt ist. Der Berechtigungsnachweis AC kann beispielsweise nur einmal nutzbar sein, das heißt nur für einen einmaligen Aufbau einer Verbindung zur zweiten Geräterealisierung berechtigen.

Der ausgestellte Berechtigungsnachweis AC wird beispielsweise widerrufen oder nicht mehr erneuert, wenn die Kommunikationsverbindung zwischen dem Kommunikationspartner ST und der ersten Geräterealisierung, hier der virtuellen Geräterealisierung DT-FD1, beendet wird. Der Zugriff auf die zweite Geräterealisierung ist somit nur solange möglich wie auch der Zugriff auf die erste Geräterealisierung besteht. Wenn die Verbindung, beispielsweise eine Kommunikationssitzung, zu der ersten Geräterealisierung beendet wird, ist dadurch auch ein Zugriff auf die zweite Geräterealisierung nicht mehr möglich. Dies kann beispielsweise über einen sogenannten Heartbeat-Mechanismus realisiert werden, der mit dem jeweiligen Berechtigungsnachweis AC verbunden ist. Dazu wird eine Netzwerkverbindung zwischen der ersten und der zweiten Geräterealisierung hier DT-FD1 und FD1 aufgebaut, in der sich die beiden Geräterealisierungen gegenseitig darüber benachrichtigen, dass sie betriebsbereit sind und ihre Aufgabe noch erfüllen können, also am Leben sind. Eine solche "Herzschlag" oder "Heartbeat"-Verbindung, siehe SesHB, wird im Verfahrensschritt S41 zwischen der ersten und der zweiten Geräterealisierung sowie zwischen dem Kommunikationspartner und der ersten Geräterealisierung im Verfahrensschritt S42 aufgebaut.

In dem aufgezeigten Beispiel kann die virtuelle Geräterealisierung DT-FD1 einen Berechtigungsnachweis AC ausstellen, der für den Zugriff vom Kommunikationspartner ST auf die virtuelle Geräterealisierung DT-FD1 also den digitalen Zwilling ermöglicht. Der übermittelte und somit ausgestellte Berechtigungsnachweis AC kann beispielsweise ein digitales Zertifikat, ein kryptografischer Schlüssel oder ein Zugangstoken sein, der Zugriffsberechtigungen auf bestimmte Dienste oder Ressourcen des Geräts ermöglicht bzw. dazu berechtigt.

Der Berechtigungsnachweis AC kann beispielsweise einen Fingerabdruck des Zertifikats als Kennung des Zertifikates des Kommunikationspartners ST enthalten. Ebenso möglich ist die Angabe der Seriennummer und des Ausstellers des Zertifikates. Alternativ kann der Berechtigungsnachweis AC auch ein Geheimnis enthalten oder referenzieren, dass der Kommunikationspartner ST sowie die beiden Geräterealisierungen DT-FD1, FD1 kennen und nutzen müssen. Dabei wird diese Kennung des Zertifikates oder auch der gesamte Berechtigungsnachweis AC kryptografisch verschlüsselt. Der Berechtigungsnachweis AC kann des Weiteren eine Autorisierungsinformationen, wie beispielsweise eine Rolle des Kommunikationspartners ST oder Attribute für bestimmte Aktionen enthalten. Der Berechtigungsnachweis AC kann des Weiteren zeitliche Beschränkungen, wie beispielsweise einen Zeitpunkt oder eine Dauer des Zugriffs und/oder geografische Position des Kommunikationspartners ST beim Zugriff enthalten. Des Weiteren kann der Berechtigungsnachweis AC Einschränkungen der nutzbaren Kommunikationsmedien, beispielsweise lediglich ein Zugang über drahtgebundene Verbindung oder über eine schnurlose Kommunikationsverbindung mittels W-LAN oder Mobilfunk, enthalten.

Der Berechtigungsnachweis AC kann außerdem Informationen zum Sicherheitszustand des Kommunikationspartners ST enthalten. Ein solcher Sicherheitszustand kann beispielsweise durch einen lokalen Agenten im Kommunikationspartner ST ermittelt werden, der regelmäßig den Systemstatus des Kommunikationspartners ST prüft. Des Weiteren kann der Berechtigungsnachweis AC einen Integritätsprüfwert des Berechtigungsnachweises AC enthalten. Dies ist beispielsweise eine Signatur oder eine kryptografische Prüfsumme, die eine Überprüfung der Integrität des Berechtigungsnachweises AC beim jeweiligen Empfänger, also dem Kommunikationspartner ST oder der zweiten Geräterealisierung, hier FD1, ermöglicht.

Der Berechtigungsnachweis AC kann bei einem Aufbau einer sicheren Kommunikationsverbindung von der ersten Geräterealisierung, hier DT-FD1, an den Kommunikationspartner ST und/oder vom Kommunikationspartner ST an die zweite Geräterealisierung, hier FD1, übermittelt werden. Insbesondere kann der Berechtigungsnachweis AC während einer Authentisierungs- und Schlüsselvereinbarung bei einem Verbindungsaufbau gemäß einem Telekommunikationsschichtprotokolls TLS, beispielsweise in einem TLS-Erweiterungsfeld, übermittelt werden. Bei einem TLS-Verbindungsaufbau mit der ersten Geräterealisierung TD-FD1 wird somit automatisch dem Kommunikationspartner ST der Berechtigungsnachweis bereitgestellt, der dann für den Verbindungsaufbau zur zweiten Geräterealisierung FD1 verwendet wird.

Zusätzlich zum Berechtigungsnachweis AC kann eine Adressinformation der zweiten Geräterealisierung, hier FD1, von der ersten Geräterealisierung, hier DT-FD1, an den Kommunikationspartner ST bereitgestellt werden. Eine solche Adressinformation ist beispielsweise die IP-Adresse der zweiten Geräterealisierung FD1 oder auch ein Name des Domänennamenservers oder eine URL-Adresse der zweiten Geräterealisierung.

Ebenso ist es möglich, den Berechtigungsnachweis AC über das Open Plattform Communication Unified Architecture Protokoll OPC UA bereitzustellen. Der Berechtigungsnachweis AC wird als Nutzdaten über eine bereits aufgebaute und authentisierte Kommunikationsverbindung, beispielsweise eine Hypertext Transferprotokoll http-Verbindung übermittelt. Alternativ kann der Berechtigungsnachweis AC bereits beim Aufbau der sicheren Kommunikationsverbindung, beispielsweise innerhalb eine Handshakes im TLS-Protokoll, übertragen werden. Es müssen somit keine getrennten Berechtigungsnachweise AC für den Zugriff auf die erste bzw. zweite Geräterealisierung verwaltet werden. Außerdem kann der Verbindungsaufbau zur zweiten Geräterealisierung effizienter, insbesondere schneller bzw. mittels einer kleineren Datenmenge erfolgen, da der bereitgestellte Berechtigungsnachweis AC kompakter ist als beispielsweise ein digitales Zertifikat, das bei einer vollständigen Authentisierung verwendet wird.

Die erste, hier die virtuelle Geräterealisierung DT-FD1, wird somit zu einem Bereitsteller für Berechtigungsnachweise AC für den Zugriff auf die physikalische Geräterealisierung FD1 ausstellt. Ebenso ist der umgekehrte Fall möglich, bei dem zuerst eine Verbindung mit der physikalischen Geräterealisierung FD1 aufgebaut wird und darüber ein Berechtigungsnachweis AC für den Verbindungsaufbau zur virtuellen Geräterealisierung DT-FD1 eingerichtet wird. Ein Berechtigungsnachweis AC in Form eines digitalen Zertifikates, das gemäß dem X.509 Standard strukturiert ist, kann insbesondere folgende Erweiterung zur Übermittlung von einem oder mehreren der genannten Informationen aufweisen. Die nachfolgende Erweiterung stellt ein Beispiel dar und ist in einer abstrakten Syntax-Notation ASN.1 geschrieben:

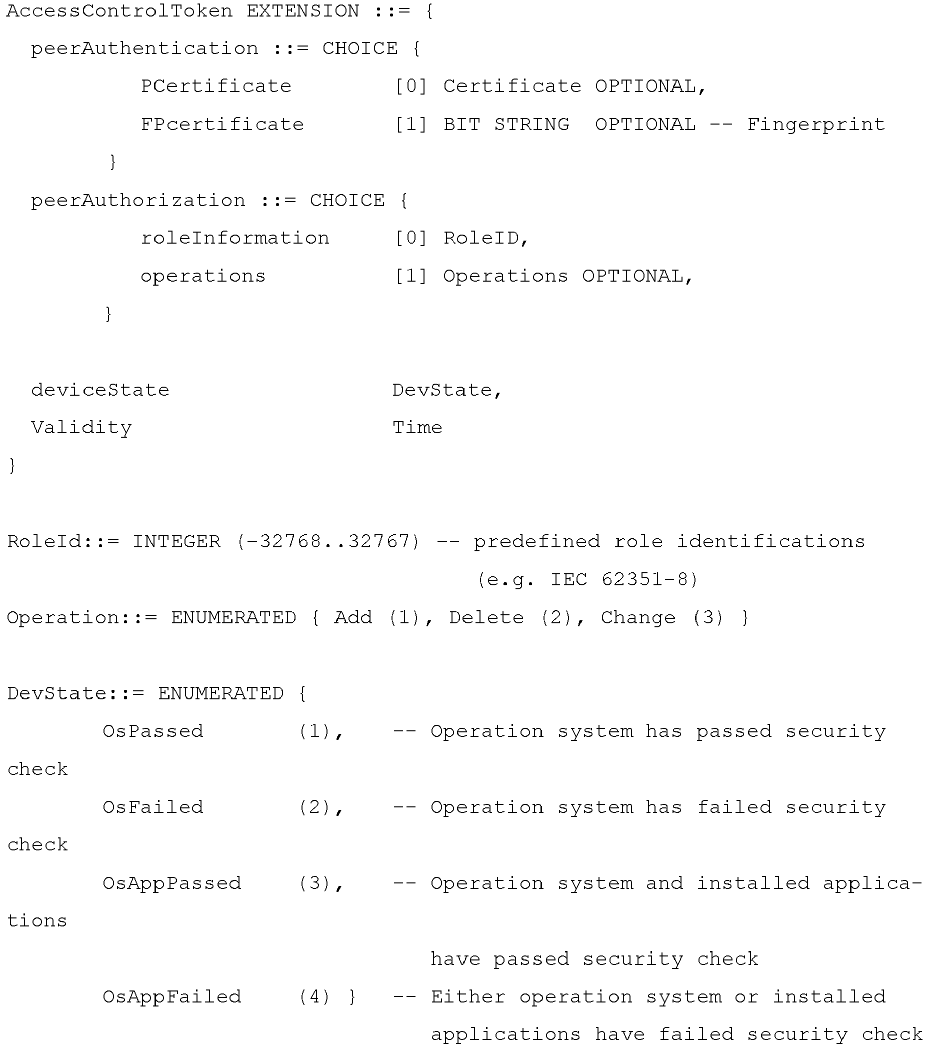

Das bedeutet, dass beispielsweise die virtuelle Geräterealisierung DT-FD1 ein digitales Zertifikat ausstellen kann, das einen geschützten Zugriff auf die zugeordnete physikalische Geräterealisierung FD1 ermöglicht. Die physikalische Geräterealisierung ist dabei das eigentliche physikalische Gerät, in Beispiel von Figur 1 das Feldgerät FD1. Bei dem digitalen Zertifikat als Berechtigungsnachweis handelt es sich um ein selbst-signiertes Zertifikat, das von der ersten Geräterealisierung des Gerätes aufgestellt wird und von der zweiten Geräterealisierung des gleichen Gerätes überprüft und akzeptiert wird. Es muss dazu keine allgemein anerkannte private Schlüsselinfrastruktur (PKI) aufgebaut und betrieben werden, da diese speziellen Zertifikate bzw. Berechtigungsnachweise nur von einem einzelnen Gerät selbst ausgestellt und überprüft werden.

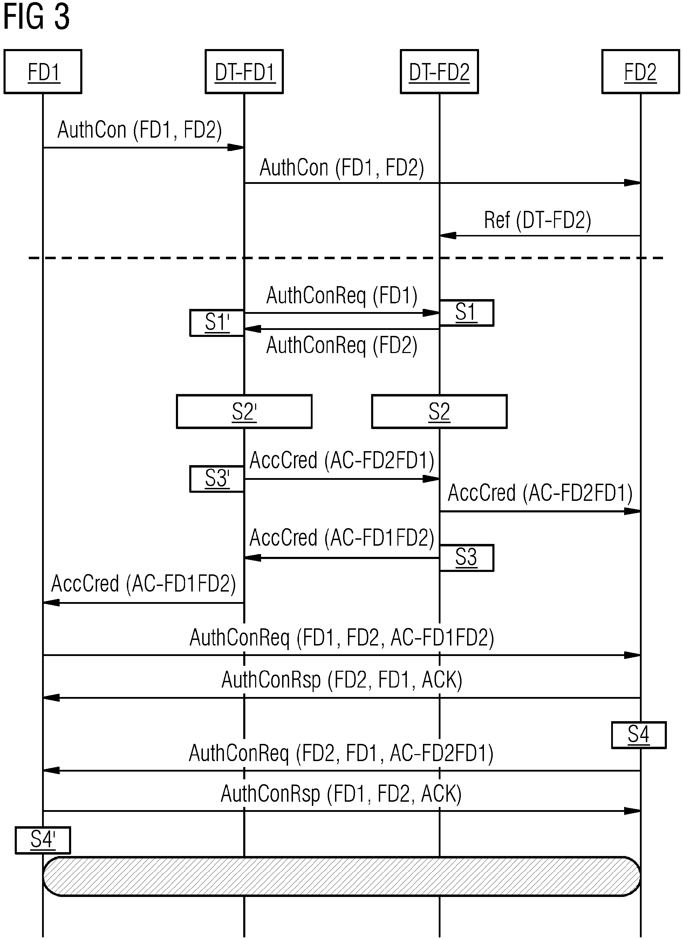

Figur 3 zeigt ein Ausführungsbeispiel für einen Zugriff eines Feldgerätes FD1 auf ein zweites Feldgerät FD2, bei dem das Gerät FD1 eine kryptografisch geschützte beidseitig authentisierte Verbindung zum Gerät FD2 aufbaut. Die eigentliche, komplexe Authentisierung zwischen den physikalischen Geräterealisierungen FD1 und FD2 erfolgt jedoch jeweils durch deren digitale Zwillinge, also deren virtuelle Geräterealisierungen DT-FD1, DT-FD2.

Die physikalische Geräterealisierung FD1 wendet sich dabei mit der Anfrage an seine eigene virtuelle Geräterealisierung DT-FD1. Diese sendet im dargestellten Beispiel zuerst eine Authentisierungsanfrage AuthCon an die physikalische Geräterealisierung FD2. Von dort wird die Anfrage intern an dessen zugeordnete virtuelle Geräterealisierung DT-FD2 verwiesen. Anschließend initiiert die virtuelle Geräterealisierung DT-FD2 eine Authentisierung der virtuellen Geräterealisierung DT-FD1 mit einer Authentisierungsanfrage. Dabei wird eine Authentisierung der virtuellen Geräterealisierung DT-FD1 von der virtuellen Geräterealisierung DT-FD2 angefragt. Die Verfahrensschritte der Authentisierung, bei der die virtuelle Geräterealisierung DT-FD1 als Kommunikationspartner bei der virtuellen Geräterealisierung DT-FD2 anfragt, sind mit den Referenzzeichen S1, S2, S3, S4 gekennzeichnet. Die Verfahrensschritte der Authentisierung der zweiten Geräterealisierung DT-FD2 als Kommunikationspartner bei der virtuellen Geräterealisierung DT-FD1 sind Verfahrensschritte mit den Referenzzeichen S1', S2', S3' und S4' dargestellt.

Die jeweilige erste Geräterealisierung empfängt mit der Authentisierungsanfragenachricht AuthConReq ein Zugriffsberechtigung des Kommunikationspartners, siehe S1, S1', überprüft diese Zugangsberechtigung, siehe S2, S2' und stellt die Berechtigungsnachweise AC-FD1FD2, AC-FD2FD1 an den Kommunikationspartner, hier also die virtuelle Geräterealisierung DT-FD1 bzw. die virtuelle Geräterealisierung DT-FD2 bereit. Die jeweiligen Berechtigungsnachweise AC-FD1FD2, AC-FD2FD1 werden von der ersten Geräterealisierung, hier DT-FD1 bzw. DT-FD2, an die jeweilige zugeordnete zweite Geräterealisierung, hier FD1 bzw. FD2, mit der Nachricht ACC-Cred übermittelt. Anschließend sendet die physikalische Geräterealisierung FD1 eine Authentisierungsanfrage AuthConReq mit dem Berechtigungsnachweis AC-FD1FD2 an die physikalische Geräterealisierung FD2 und erhält von dieser eine Zugriffserlaubnis, was mit einer Bestätigungsnachricht AuthConRsp bestätigt wird, siehe dazu auch den eingezeichneten Verfahrensschritt S4. Entsprechend erlaubt im Verfahrensschritt S4' die zweite Geräterealisierung FD1 nach einer Authentisierungsanfrage durch die zweite Geräterealisierung FD2 und den darin enthaltenen Berechtigungsnachweis AC-FD2FD1 Zugang zur physikalischen Geräterealisierung FD1.

Somit überprüfen die beiden virtuellen Geräterealisierungen jeweils den Kommunikationspartner, also die physikalischen Geräterealisierungen FD2 und FD1. Die physikalische Geräterealisierung kann beispielsweise ein bereits in einem Netzwerk vorhandenes Gerät sein, das keine Null-Vertrauens-Zugangsprüfung unterstützt.

Alle Verfahrensschritte können durch die entsprechenden Geräte implementiert werden, die zum Ausführen des jeweiligen Verfahrensschrittes geeignet sind. Alle Funktionen, die von gegenständlichen Merkmalen ausgeführt werden können, können ein Verfahrensschritt des Verfahrens sein. Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Verfahren zur Authentisierung eines Kommunikationspartners (ST) an einem Gerät, bei dem neben einer physikalischen Geräterealisierung (FD1) mindestens eine dem Gerät zugeordnete virtuelle Geräterealisierung (TD-FD1) vorliegt, mit den Schritten:
- Empfangen (S1) einer Zugriffsberechtigung eines Kommunikationspartners (ST) in einer ersten dieser beiden Geräterealisierungen,
- Überprüfen (S2) der Zugriffsberechtigung durch die erste Geräterealisierung, und
- falls die Zugriffsberechtigung als zulässig erachtet wird, Bereitstellen (S3) eines Berechtigungsnachweises (AC) von der ersten Geräterealisierung an den Kommunikationspartner (ST), und
- Erlauben (S4) eines Zugriffs auf die zweite Geräterealisierung dieser beiden Geräterealisierungen durch den Kommunikationspartner (ST) mittels des Berechtigungsnachweises (AC).

2. Verfahren nach Anspruch 1, wobei der Berechtigungsnachweis (AC) ein Zugangsberechtigungsnachweis für eine Zugangsauthentisierung und/oder ein Zugriffsberechtigungsnachweis für gewährte Zugriffsrechte ist.

3. Verfahren nach einem der vorangehenden Ansprüche, wobei die Gültigkeit des Berechtigungsnachweises (AC) zeitlich begrenzt ist.

4. Verfahren nach einem der vorangehenden Ansprüche, wobei die Anzahl der Zugriffe auf die zweite Geräterealisierung mittels des Berechtigungsnachweises (AC) begrenzt ist.

5. Verfahren nach einem der vorangehenden Ansprüche, wobei der Berechtigungsnachweis (AC) widerrufen wird oder nicht erneuert wird, wenn die Verbindung zwischen der ersten Geräterealisierung und dem Kommunikationspartner (ST) beendet wird.

6. Verfahren nach einem der vorangehenden Ansprüche, wobei der Berechtigungsnachweis (AC) ein digitales Zertifikat oder ein kryptographischer Schlüssel oder ein Zugangstoken ist.

7. Verfahren nach einem der vorangehenden Ansprüche, wobei der Berechtigungsnachweis (AC) mindestens eine der folgenden Informationen umfasst:
- eine Kennung des Zertifikates des Kommunikationspartners (ST),
- Autorisierungsinformation des Kommunikationspartners (ST),
- eine Zeiteinschränkung und/oder geographische Einschränkung für den Zugriff des Kommunikationspartners (ST),
- eine Einschränkung der nutzbaren Kommunikationsmedien,
- eine Einschränkung der nutzbaren Kommunikationsprotokolle,
- eine Information zum Sicherheitszustand des Kommunikationspartners (ST),
- ein Integritätsprüfwert des Berechtigungsnachweises (AC).

8. Verfahren nach einem der vorangehenden Ansprüche, wobei der Berechtigungsnachweis (AC) bei einem Aufbau einer sicheren Kommunikationsverbindung von der ersten Geräterealisierung an den Kommunikationspartner (ST) und/oder vom Kommunikationspartner (ST) an die zweite Geräterealisierung übermittelt wird.

9. Verfahren nach einem der vorangehenden Ansprüche, wobei der Berechtigungsnachweis (AC) über eine authentisierte, bestehende Kommunikationsverbindung von der ersten Geräterealisierung an den Kommunikationspartner (ST) und/oder vom Kommunikationspartner (ST) an die zweite Geräterealisierung übermittelt wird.

10. Verfahren nach einem der vorangehenden Ansprüche, wobei zusätzlich eine Adressinformation der zweiten Geräterealisierung von der ersten Geräterealisierung an den Kommunikationspartner (ST) bereitgestellt wird.

11. Verfahren nach einem der vorangehenden Ansprüche, wobei beim Überprüfen der Zugriffsberechtigung durch die erste Geräterealisierung die Integrität und/oder eine Zulässigkeit der aktuellen Konfiguration des Kommunikationspartners (ST) überprüft wird.

12. Verfahren nach einem der vorangehenden Ansprüche, wobei die erste Geräterealisierung eine Information zur Konfiguration des Gerätes an den Kommunikationspartner (ST) übermittelt.

13. Gerät umfassend eine physikalische Geräterealisierung (FD1) und eine zugeordneten virtuelle Geräterealisierung (TD-FD1), die derart ausgebildet sind,
- eine Zugriffsberechtigung eines Kommunikationspartners (ST) in einer ersten dieser beiden Geräterealisierungen zu empfangen,
- die Zugriffsberechtigung durch die erste Geräterealisierung zu überprüfen, und
- falls die Zugriffsberechtigung als zulässig erachtet wird, einen Berechtigungsnachweis (AC) von der ersten Geräterealisierung an den Kommunikationspartner (ST) bereitzustellen, und
- einen Zugriff auf die zweite Geräterealisierung dieser beiden Geräterealisierungen (FD1, DT-FD1) durch den Kommunikationspartner (ST) mittels des Berechtigungsnachweises (AC) zu erlauben.

14. Gerät nach Anspruch 13, wobei die virtuelle Geräterealisierung (TD-FD1) ein OPC UA-Server gemäß einem Open Platform Communication Unified Architecture-Standard ist.

15. Gerät nach Anspruch 13 oder 14, wobei die virtuelle Geräterealisierung (TD-FD1) auf einem zentralen Server (13), einem Randserver (12) oder auf der physikalischen Geräterealisierung (FD1, ..., FD5) des Gerätes ausgebildet ist.

16. Computerprogrammprodukt, umfassend ein nicht flüchtiges Computerlesbares Medium, das direkt in einen Speicher eines digitalen Computers ladbar ist, umfassend Programmcodeteile, die dazu geeignet sind, die Schritte des Verfahrens nach einem der Ansprüche 1 bis 12 durchzuführen.
